# EUROPEAN PATENT APPLICATION

(11) **EP 4 654 309 A1**
(43) Date of publication of application: **26.11.2025**
(21) Application number: 24797332.4
(22) Date of filing: 16.04.2024
(51) Int. Cl.: H01M 10/04, H01M 10/52, H01M 50/609, H01M 50/105

(54) **SECONDARY BATTERY MANUFACTURING METHOD AND POUCH CELL**

(30) Priority: 28.04.2023 KR 20230056513
(71) Applicant: LG Energy Solution, Ltd., Seoul 07335 (KR)
(72) Inventor: CHOI, Woo Sung, Daejeon 34122 (KR); YU, Sung Hoon, Daejeon 34122 (KR); SUNG, Nak Gi, Daejeon 34122 (KR); KWAK, Se Hyun, Daejeon 34122 (KR)
(74) Representative: Plasseraud IP
(86) International application number: PCT/KR2024/005075
(87) International publication number: WO 2024/225676

(57) **Abstract**

The present disclosure relates to a manufacturing method for a secondary battery capable of improving process efficiency by reducing the amount of cases removed in the manufacturing process and by reducing the space required for the manufacturing process, and a pouch cell used therein.

The pouch cell according to the present disclosure may include an electrode assembly, a degassing member removing gas generated in the electrode assembly, and a pair of cases accommodating the electrode assembly and the degassing member therein, wherein at least one of the pair of cases may include a cup portion molded to accommodate the electrode assembly and a terrace portion forming an edge of the cup portion, and the degassing member may be disposed on the terrace portion.

## Description

### TECHNICAL FIELD

### CROSS-REFERENCE TO RELATED APPLICATIONS

The present application claims priority to Korean Patent Application No. 10-2023-0056513 filed on April 28, 2023 in the Republic of Korea, the disclosures of which are incorporated herein by reference.

### TECHNICAL FIELD

The present disclosure relates to a manufacturing method for a secondary battery and a pouch cell, and more specifically, to a manufacturing method for a secondary battery capable of being charged and discharged and a pouch cell used therein.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Furthermore, with the technological development of, and increasing demand for, electronic mobile devices and electric vehicles using batteries, the demand for batteries as an energy source is rapidly increasing, and accordingly, many studies are being conducted on batteries that meet a variety of needs.

Batteries that store electrical energy may generally be divided into primary batteries and secondary batteries. Primary batteries are disposable consumable batteries, whereas secondary batteries are rechargeable batteries manufactured using materials in which oxidation and reduction processes between current and materials are repeatable. That is, when a reduction reaction is performed on the material by current, the power is charged, and when an oxidation reaction is performed on the material, the power is discharged. As such charging and discharging are repeatedly performed, electricity is generated.

A secondary battery may be classified into a cylindrical cell, a pouch-type cell, and a prismatic cell according to their shape. Among them, the pouch-type cell may include an electrode assembly in the form in which a positive electrode, a negative electrode, a separator, and the like are stacked inside the pouch.

Meanwhile, the manufacturing process of the pouch-type cell may include a process of removing gas accumulated inside the case. In this regard, the pouch-type cell may undergo an activation process in the manufacturing process. At this time, gas may be generated inside the case as the electrode assembly is repeatedly charged and discharged, and the gas inside the case may be removed through a degassing process. If the gas inside the pouch is not discharged in the manufacturing process of the pouch-type cell, it may cause problems such as degrading the performance of the completed pouch-type cell.

In the conventional manufacturing method for a pouch-type secondary battery, gas is captured in a gas pocket formed around a cup portion where the electrode assembly is disposed in the case, and the captured gas is physically discharged to the outside of the case through a hole or the like to remove the gas inside the case.

In this type of manufacturing method for a secondary battery, the size of the gas pocket gradually increases as a large amount of gas is generated. Therefore, a larger manufacturing space is required according to the increased size of the gas pocket. In addition, since a process of removing a portion of the gas pocket after the gas is removed is included, the portion to be removed increases according to the increased size of the gas pocket. That is, the cost and time used in the manufacturing process also increase. As such, the conventional manufacturing method for a secondary battery has a problem that process efficiency is reduced due to a decrease in economic feasibility and space utilization.

Therefore, there is a need for a manufacturing method for a secondary battery capable of improving process efficiency when a large amount of gas is generated in the manufacturing process and a pouch cell used therein.

### SUMMARY

### TECHNICAL PROBLEM

The present disclosure is designed to solve the problems of the related art, and therefore the present disclosure is directed to providing a manufacturing method for a secondary battery capable of improving process efficiency by reducing the amount of cases removed in the manufacturing process and by reducing the space required for the manufacturing process, and a pouch cell used therein.

### TECHNICAL SOLUTION

A pouch cell according to the present disclosure may include an electrode assembly, a degassing member removing gas generated in the electrode assembly, and a pair of cases accommodating the electrode assembly and the degassing member therein, wherein at least one of the pair of cases may include a cup portion molded to accommodate the electrode assembly and a terrace portion forming an edge of the cup portion, and the degassing member may be disposed on the terrace portion.

The degassing member may have a gas absorbent capable of absorbing gas through a chemical reaction.

The degassing member may further have an exterior portion including a porous material, and the gas absorbent may be accommodated inside the exterior portion.

The gas absorbent may include NaOH or Ca(OH)₂ to remove CO₂ generated in the electrode assembly.

The gas absorbent may include a material that removes at least one of O₂, C₂H₄, C₂H₆, and CO generated in the electrode assembly.

The terrace portion may include an electrolyte injection portion disposed at one end so as to be spaced apart from the degassing member.

The pair of cases may be disposed to face each other, and a gas pocket portion where gas generated in the electrode assembly is captured may be formed between the terrace portions facing each other, wherein the degassing member may be disposed in the gas pocket portion.

The degassing member may be disposed eccentrically in the gas pocket portion.

A manufacturing method for a secondary battery according to the present disclosure may include (a) a step of accommodating an electrode assembly in a cup portion formed in a case, (b) a step of disposing a degassing member inside the case, (c) a step of activating the electrode assembly by charging and discharging it, and (d) a step of cutting along a cutting portion of the case so that a portion of the case including the degassing member is removed.

The manufacturing method for a secondary battery may further include a step of sealing the cutting portion of the case prior to the step (d).

In the step (b), the degassing member may be disposed to be spaced apart from the cup portion.

In the step (b), the degassing member may be disposed to be attached to the inside of the case.

### ADVANTAGEOUS EFFECTS

According to preferred embodiments of the present disclosure, space utilization may be improved by reducing the space required for the manufacturing process of a secondary battery.

In addition, the volume of cases required in the manufacturing process of a secondary battery may be reduced, and the amount of cases to be removed may be reduced.

At the same time, gas inside the case may be removed more efficiently in the manufacturing process of a secondary battery.

Accordingly, the time and cost used in the manufacturing process of a secondary battery may be reduced, thereby improving process efficiency.

In addition, effects that may be easily predicted by those skilled in the art from configurations according to preferred embodiments of the present disclosure may be included.

### BRIEF DESCRIPTION OF THE DRAWINGS

The accompanying drawings illustrate a preferred embodiment of the present disclosure and together with the following detailed description, serve to provide a further understanding of the technical aspect of the present disclosure, and thus, the present disclosure should not be construed as being limited to the drawings.
FIG. 1 is a perspective view schematically showing a pouch cell according to an embodiment of the present disclosure.
FIG. 2 is a plan view schematically showing a pouch cell according to an embodiment of the present disclosure.
FIG. 3 is an exploded perspective view schematically showing a pouch cell according to an embodiment of the present disclosure.
FIG. 4 is a flow chart schematically showing a manufacturing method for a secondary battery according to another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

In addition, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Pouch Cell

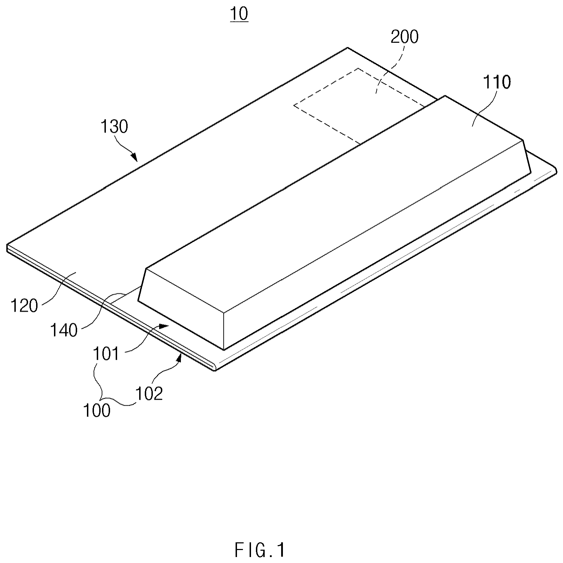

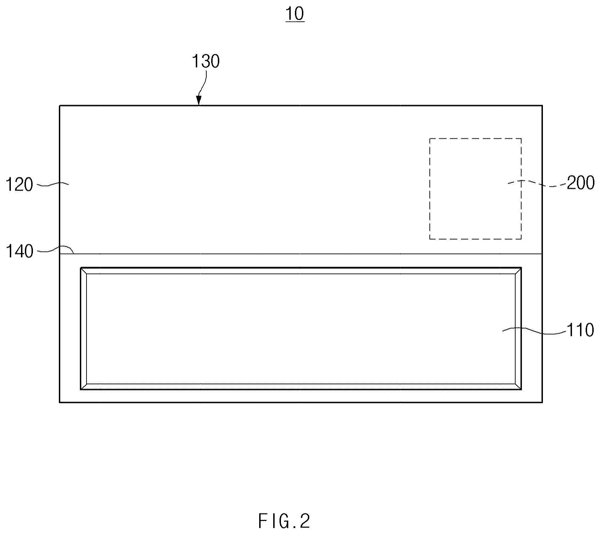

FIG. 1 is a perspective view schematically showing a pouch cell 10 according to an embodiment of the present disclosure, and FIG. 2 is a plan view schematically showing a pouch cell 10 according to an embodiment of the present disclosure.

The pouch cell 10 according to an embodiment of the present disclosure may include a case 100. Here, the case 100 may be configured as a pair. Specifically, the case 100 may include a first case 101 and a second case 102 that are coupled to face each other.

For example, the case 100 has a pair connected to each other, and may be folded based on the connected portion. At this time, the first case 101 and the second case 102 have a shape connected to each other, and may be coupled to each other while being folded.

As another example, the pair of cases 100 may also be coupled to face each other while being separated from each other. At this time, the first case 101 and the second case 102 may each have independent configurations.

Since the case 100 of the pouch cell 10 according to an embodiment of the present disclosure is in a state where the first case 101 and the second case 102 are coupled to each other, all the forms previously described with reference to examples are possible.

The pouch cell 10 may further include an electrode assembly 300 accommodated inside the case 100. Here, the electrode assembly 300 may include a positive electrode, a negative electrode, and a separator. Specifically, the electrode assembly 300 may have a jelly-roll form in which a positive electrode, a negative electrode, and a separator are wound, or a form in which a positive electrode, a negative electrode, and a separator are stacked. The positive electrode may have a positive electrode active material applied to a positive electrode current collector including aluminum, and the negative electrode may have a negative electrode active material applied to a negative electrode current collector including copper.

The pouch cell 10 according to the present disclosure is used in the manufacturing process of a secondary battery capable of being charged and discharged, and may have a form in which a portion of the case 100 is not removed compared to the finished product. Hereinafter, in order to distinguish from the pouch cell 10, the secondary battery, which is a finished product manufactured by the manufacturing method for a secondary battery, is referred to as the final pouch-type cell.

The pouch cell 10 used in the manufacturing method for a secondary battery for manufacturing the final pouch-type cell may further include a degassing member 200, as an example of a configuration for removing gas generated in the manufacturing process.

In this regard, the case 100 of the pouch cell 10 may include an electrolyte. In the manufacturing method for a secondary battery, once the electrode assembly 300 and the electrolyte are accommodated inside the case 100, an activation process may be performed. In the activation process, a gas such as carbon dioxide may be generated inside the case 100, and the generated gas may be captured inside the case 100 and then discharged to the outside through a hole or the like. At this time, the degassing member 200 of the pouch cell 10 may remove gas generated inside the case 100. Details about the degassing member 200 will be described later.

As described above, the case 100 of the pouch cell 10 may be configured as a pair. In this case, the pair of cases 100 may accommodate the electrode assembly 300 and the degassing member 200 therein.

At least one of the pair of cases 100 may include a cup portion 110 molded to accommodate the electrode assembly 300 and a terrace portion 120 forming an edge of the cup portion 110. That is, the cup portion 110 may be molded only in the first case 101, or the cup portion 110 may be molded in both the first case 101 and the second case 102. Gas generated in the activation process described above may be captured in the terrace portion 120 of the case 100.

Meanwhile, the degassing member 200 of the pouch cell 10 according to an embodiment of the present disclosure may be disposed on the terrace portion 120 of the case 100. Referring to FIGS. 1 and 2, the degassing member 200 may be disposed to be spaced apart from the cup portion 110 of the case 100. After the activation process, the case 100 may be partially removed by cutting based on the cutting portion 140 formed between the cup portion 110 and the terrace portion 120. Therefore, the degassing member 200 removing gas inside the case 100 in the activation process is removed together with a portion of the case 100, so that the final pouch-type cell does not include the degassing member 200. Since the degassing member 200 is disposed to be spaced apart from the cup portion 110, the process of removing a portion of the case 100 may be performed more efficiently.

Since the pouch cell 10 according to an embodiment of the present disclosure includes the degassing member 200, the case 100 may have a relatively small volume of gas capture space. That is, the production cost of the final pouch-type cell may be reduced by decreasing the gas capture space to be removed. In addition, conventionally, the gas capture space should be increased as the gas generated in the process increases, but the pouch cell 10 according to an embodiment of the present disclosure may reduce the need to increase the gas capture space by the degassing member 200. Therefore, the process efficiency of the manufacturing method for a secondary battery may be improved.

As an example of a configuration for efficiently removing gas, the degassing member 200 according to an embodiment of the present disclosure may include a gas absorbent (not shown). The gas absorbent of the degassing member 200 may absorb gas through a chemical reaction.

With respect to the chemical reaction of the gas absorbent, the gas absorbent may include sodium hydroxide (NaOH) or calcium hydroxide (Ca(OH)₂). In the activation process, a large amount of carbon dioxide (CO₂) may be generated inside the case 100 of the pouch cell 10. Carbon dioxide generated in the activation process may be removed by reacting with sodium hydroxide or calcium hydroxide. At this time, carbon dioxide may chemically react with sodium hydroxide or calcium hydroxide to generate water or heat. According to experiments, the water or heat generated by the chemical reaction of carbon dioxide may be in very small amounts, and thus may not affect the process.

The gas absorbent of the degassing member 200 according to an embodiment of the present disclosure may include sodium hydroxide or calcium hydroxide to remove carbon dioxide more efficiently.

For more efficient removal of carbon dioxide, the gas absorbent may also include soda lime. Here, soda lime may mean a granular material that has the action of absorbing carbon dioxide and water. In addition, soda lime may include sodium hydroxide, calcium hydroxide, and silica anhydride.

Meanwhile, the gas absorbent of the degassing member 200 may further include a material that removes gases other than carbon dioxide. Specifically, the gas absorbent may further include a material that removes at least one of O₂, C₂H₄, C₂H₆, and CO. Therefore, the gas absorbent of the degassing member 200 may remove gases other than carbon dioxide among the gases generated in the activation process. Here, the materials that remove O₂, C₂H₄, C₂H₆, and CO may vary.

As an example of a configuration for accommodating the gas absorbent, the degassing member 200 according to an embodiment of the present disclosure may further include an exterior portion (not shown). That is, the gas absorbent may be disposed while being accommodated in the exterior portion.

The exterior portion of the degassing member 200 may be in the form of a pocket having an approximately rectangular cross-section. In this case, the gas absorbent may be accommodated inside the exterior portion in the form of a pocket.

Meanwhile, the exterior portion of the degassing member 200 may include a porous material. Specifically, the exterior portion of the degassing member 200 may be made of a porous material. Here, the porous material may mean a material that allows gases to pass through but does not allow solids to pass through.

Since the exterior portion of the degassing member 200 includes a porous material, the gas absorbent may be prevented from leaking out of the exterior portion, while allowing the gas to be removed to move smoothly into the gas absorbent.

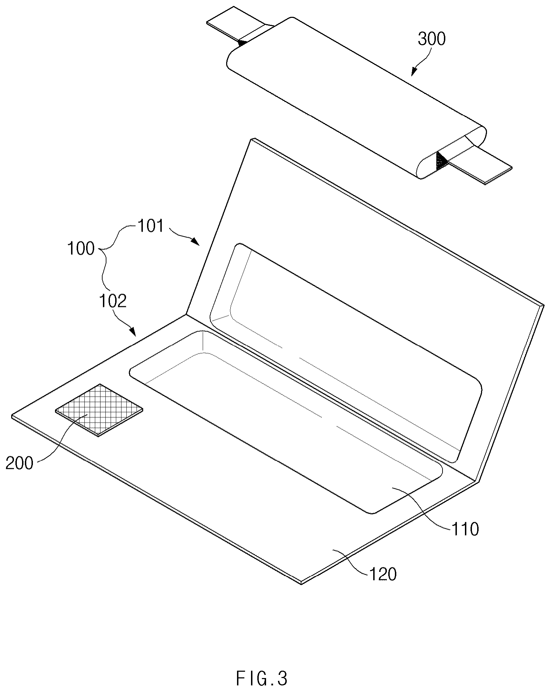

FIG. 3 is an exploded perspective view schematically showing a pouch cell 10 according to an embodiment of the present disclosure.

The case 100 of the pouch cell 10 according to an embodiment of the present disclosure may be disposed so that a pair thereof face each other. The pair of cases 100 facing each other may each include a terrace portion 120, and a gas pocket portion may be formed between the terrace portions 120 facing each other. As previously described, gas generated in the activation process may be captured in the gas pocket portion.

Referring to FIG. 3, the degassing member 200 of the pouch cell 10 may be disposed in the gas pocket portion. That is, the degassing member 200 may be disposed in a space where gas generated in the activation process is captured.

Since the degassing member 200 is disposed in the gas pocket portion, the degassing member 200 may be located in the same space as the gas generated in the activation process. Therefore, the degassing member 200 may efficiently come into contact with the gas and may efficiently remove the gas.

Meanwhile, the degassing member 200 of the pouch cell 10 according to an embodiment of the present disclosure may be disposed eccentrically in the gas pocket portion. Specifically, the degassing member 200 may be disposed in a form that is biased to one side with respect to the longitudinal direction of the gas pocket portion.

In this regard, the terrace portion 120 of the case 100 may include an electrolyte injection portion 130. The electrolyte injection portion 130 may be an inlet for injecting electrolyte into the case 100 accommodating the electrode assembly 300. Specifically, the electrolyte injection portion 130 may be formed by the first case 101 and the second case 102 that are coupled to face each other. More specifically, the electrolyte injection portion 130 may be formed at a position corresponding to one end of the terrace portion 120.

The electrolyte injection portion 130 may be spaced apart from the degassing member 200 eccentrically disposed in the gas pocket portion. Therefore, when the electrolyte is injected into the case 100, interference by the degassing member 200 may be minimized. In addition, the degassing member 200 is not affected by the injected electrolyte, and thus there is little concern of degrading performance.

Meanwhile, the degassing member 200 may be disposed to be spaced apart from one end of the terrace portion 120 where the electrolyte injection portion 130 is formed. Therefore, when one end of the terrace portion 120 is sealed after the electrolyte is injected through the electrolyte injection portion 130, it may not be interfered with by the degassing member 200. As a result, sealing may be performed efficiently. Here, sealing may refer to a process of sealing the first case 101 and the second case 102 facing each other using heat and pressure.

The pouch cell 10 according to an embodiment of the present disclosure may be an intermediate product for manufacturing the final pouch-type cell that is a finished product. The pouch cell 10 may include the degassing member 200 to efficiently remove gas in the manufacturing process. In addition, since the degassing member 200 is removed in the manufacturing process, it may not affect the shape of the final pouch-type cell.

### Manufacturing Method for Secondary Battery

Hereinafter, a detailed description of the same configuration as the configuration of the pouch cell 10 according to an embodiment of the present disclosure will be omitted.

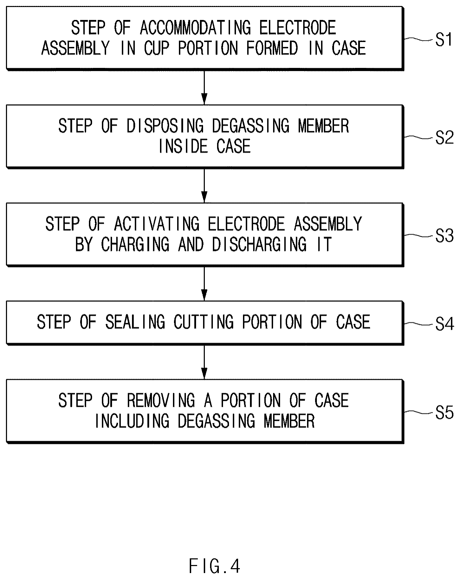

FIG. 4 is a flow chart schematically showing a manufacturing method for a secondary battery according to another embodiment of the present disclosure.

Referring to FIG. 4, a manufacturing method for a secondary battery according to another embodiment of the present disclosure may include a step S1 of accommodating the electrode assembly 300 in the cup portion 110 formed in the case 100. Hereinafter, this step is referred to as step (a). The case 100 may include the cup portion 110 for accommodating the electrode assembly 300. The cup portion 110 may be formed by molding a pouch film in the form of a thin plate. For example, the cup portion 110 may be formed through a method of molding a concave space by pressing the pouch film using a molding device or the like.

In the manufacturing method for a secondary battery according to another embodiment of the present disclosure, the electrode assembly 300 is accommodated in the cup portion 110 of the case 100 in step (a), and then, a step S2 of disposing the degassing member 200 inside the case 100 may be performed. Hereinafter, this step is referred to as step (b). Specifically, step (b) may include a step of disposing the degassing member 200 between the pair of cases 100 and coupling the pair of cases 100 to face each other.

Meanwhile, in step (b), the degassing member 200 may be disposed on the terrace portion 120. In this case, the terrace portion 120 may refer to a portion forming a perimeter of the cup portion 110 in the case 100. The terrace portion 120 may be a portion that is not molded in the case 100. That is, a separate process of additionally molding the case 100 is not required for disposing the degassing member 200 in step (b). Therefore, process efficiency and economic feasibility may be improved.

Meanwhile, the degassing member 200 may be attached to the inside of the terrace portion 120. Therefore, during the secondary battery manufacturing process, the degassing member 200 may be fixed without moving. In this case, the method in which the degassing member 200 is attached to the inside of the terrace portion 120 may vary.

In the manufacturing method for a secondary battery according to another embodiment of the present disclosure, after proceeding to step (b), an electrolyte may be injected into the case 100 accommodating the electrode assembly 300 and the degassing member 200. In this case, a step of forming the electrolyte injection portion 130 by combining portions of the pair of cases 100 may be performed first. That is, the remaining portion of the case 100 except for the electrolyte injection portion 130 for injecting the electrolyte may be sealed. Here, sealing may refer to a process of sealing the cases 100 facing each other using heat and pressure. After the sealing of the portion excluding the electrolyte injection portion 130 is completed, the electrolyte may be injected into the case 100.

Meanwhile, as described in an embodiment of the present disclosure, the case 100 has a shape in which the first case 101 and the second case 102 are connected to each other, and may be folded based on the connected portion. In addition, the first case 101 and the second case 102 may also be coupled to face each other while being separated from each other. In this case, the separated pair of cases 100 may have a wider portion sealed for coupling than the connected form.

In the manufacturing method for a secondary battery according to another embodiment of the present disclosure, an activation step S3, in which the case 100 with the electrolyte injected is sealed up to the electrolyte injection portion 130 and stored for a certain period of time while the electrode assembly 300 is repeatedly charged and discharged, may be performed. Hereinafter, this step is referred to as step (c).

As the pouch cell 10 is activated in step (c), gas may be generated inside the case 100. In order to remove gas generated at this time, the manufacturing method for a secondary battery according to another embodiment of the present disclosure may include a process of removing the gas generated inside the case 100. That is, the gas generated by activation in step (c) may be removed by the degassing member 200 accommodated in the case 100 in step (b). Meanwhile, gases that are not removed by the degassing member 200 may be captured in the terrace portion 120 of the case 100.

The gas captured in the terrace portion 120 may affect the performance of the final completed pouch-type cell. Therefore, the manufacturing method for a secondary battery may include a process of removing the captured gas. In this regard, the manufacturing method for a secondary battery may include a step S5 of cutting along the cutting portion 140 of the case 100 so that a portion of the case 100 including the degassing member 200 is removed. In this case, the cutting portion 140 of the case 100 may be formed in the terrace portion 120 and may be formed adjacent to the cup portion 110 in a form extending along the longitudinal direction of the cup portion 110 (see FIG. 2).

Since a portion of the terrace portion 120 where the gas is captured and the degassing member 200 are removed, most of the gas generated in the course of the process and the degassing member 200 may not remain in the final completed pouch-type cell.

Meanwhile, in step (b), the degassing member 200 may be disposed to be spaced apart from the cup portion 110 in which the electrode assembly 300 is accommodated. Specifically, the degassing member 200 may be disposed to be spaced apart from the cutting portion 140. Therefore, when the cutting portion 140 is cut, it is not interfered with by the degassing member 200, and thus a portion of the case 100 may be removed efficiently.

The manufacturing method for a secondary battery according to another embodiment of the present disclosure may further include a step S4 of sealing the cutting portion 140 of the case 100 prior to step (d).

When the cutting portion 140 is cut without sealing the cutting portion 140, an electrolyte or the like inside the case 100 may leak to the outside. Therefore, the cutting portion 140 may be sealed before step (d) is performed to prevent the electrolyte or the like from escaping to the outside.

As previously described, in step (b), the degassing member 200 may be disposed to be spaced apart from the cup portion 110 in which the electrode assembly 300 is accommodated. Specifically, the degassing member 200 may be disposed to be spaced apart from the cutting portion 140. Therefore, when the cutting portion 140 is sealed, it is not interfered with by the degassing member 200, and thus sealing may be performed efficiently.

The manufacturing method for a secondary battery according to another embodiment of the present disclosure includes a step of disposing the degassing member 200 on the terrace portion 120 of the case 100, so that the gas inside the case 100 may be removed more efficiently in the process of removing gas. In addition, since the manufacturing method for a secondary battery requires a relatively small space to capture gas, the amount of cases 100 to be removed may be reduced, thereby improving process efficiency and economic feasibility.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [LIST OF REFERENCE NUMERALS]

10: Pouch cell
100: Case
101: First case
102: Second case
110: Cup portion
120: Terrace portion
130: Electrolyte injection portion
140: Cutting portion
200: Degassing member
300: Electrode assembly

## Claims

1. A pouch cell comprising:
an electrode assembly;
a degassing member removing gas generated in the electrode assembly; and
a pair of cases accommodating the electrode assembly and the degassing member therein,
wherein at least one of the pair of cases comprises a cup portion molded to accommodate the electrode assembly and a terrace portion forming an edge of the cup portion, and
the degassing member is disposed on the terrace portion.

2. The pouch cell according to claim 1,
wherein the degassing member has a gas absorbent capable of absorbing gas through a chemical reaction.

3. The pouch cell according to claim 2,
wherein the degassing member further has an exterior portion comprising a porous material, and
the gas absorbent is accommodated inside the exterior portion.

4. The pouch cell according to claim 2,
wherein the gas absorbent comprises NaOH or Ca(OH)₂ to remove CO₂ generated in the electrode assembly.

5. The pouch cell according to claim 2,
wherein the gas absorbent comprises a material that removes at least one of O₂, C₂H₄, C₂H₆, and CO generated in the electrode assembly.

6. The pouch cell according to claim 1,
wherein the terrace portion comprises an electrolyte injection portion disposed at one end so as to be spaced apart from the degassing member.

7. The pouch cell according to claim 1,
wherein the pair of cases are disposed to face each other, and
a gas pocket portion where gas generated in the electrode assembly is captured is formed between the terrace portions facing each other,
wherein the degassing member is disposed in the gas pocket portion.

8. The pouch cell according to claim 7,
wherein the degassing member is disposed eccentrically in the gas pocket portion.

9. A manufacturing method for a secondary battery, comprising:
(a) a step of accommodating an electrode assembly in a cup portion formed in a case;
(b) a step of disposing a degassing member inside the case;
(c) a step of activating the electrode assembly by charging and discharging it; and
(d) a step of cutting along a cutting portion of the case so that a portion of the case comprising the degassing member is removed.

10. The manufacturing method for a secondary battery according to claim 9, further comprising:
a step of sealing the cutting portion of the case prior to the step (d).

11. The manufacturing method for a secondary battery according to claim 9,
wherein in the step (b), the degassing member is disposed to be spaced apart from the cup portion.

12. The manufacturing method for a secondary battery according to claim 9,
wherein in the step (b), the degassing member is disposed to be attached to the inside of the case.
